# EUROPEAN PATENT SPECIFICATION

(11) **EP 3 140 436 B1**
(45) Date of publication and mention of the grant of the patent: **25.12.2019**
(21) Application number: 15722632.5
(22) Date of filing: 30.04.2015
(51) Int. Cl.: C23C 22/34, C23C 22/80, C23C 22/83, C25D 13/20, C09D 5/44, C09D 7/40, C25D 13/04, C25D 13/22

(54) **METAL PRETREATMENT MODIFICATION FOR IMPROVED THROWPOWER**
METALLVORBEHANDLUNGSMODIFIZIERUNG FÜR VERBESSERTE WURFLEISTUNG
MODIFICATION DE PRÉTRAITEMENT DE MÉTAL POUR UN POUVOIR DE PÉNÉTRATION AMÉLIORÉ

(30) Priority: 05.05.2014 US 201414269628
(43) Date of publication of application: 15.03.2017
(73) Proprietor: PPG Industries Ohio, Inc., Cleveland, OH 44111 (US)
(72) Inventor: SILVERNAIL, Nathan J., Allison Park, PA 15101 (US); KRUSZEWSKI, Kristen M., Allison Park, PA 15101 (US); SYLVESTER, Kevin T., Lawrence, PA 15055 (US)
(74) Representative: f & e patent
(86) International application number: PCT/US2015/028450
(87) International publication number: WO 2015/171413

(56) References cited:
- EP-A1- 0 713 540
- WO-A1-01/06035
- DE-A1-102012 219 296
- JP-A- 2008 088 552
- US-A1- 2006 151 070
- US-A1- 2011 189 401
- US-A1- 2013 146 460
- US-A1- 2013 266 819

## Description

### FIELD OF THE INVENTION

The present invention relates to metal pretreatment compositions and to methods for treating a metal substrate prior to painting using the metal pretreatment compositions.

### BACKGROUND OF THE INVENTION

The use of protective coatings on metal substrates for improved corrosion resistance and paint adhesion is common. Conventional techniques for coating such substrates include techniques that involve pretreating the metal substrate with a phosphate conversion coating and chrome-containing rinses. The use of such phosphate and/or chromate-containing compositions, however, imparts environmental and health concerns. As a result, chromate-free and/or phosphate-free pretreatment compositions have been developed. Such compositions are generally based on chemical mixtures that in some way react with the substrate surface and bind to it to form a protective layer. For example, pretreatment compositions based on a Group IV(b) metal compound have recently become more prevalent.

After pretreating the substrates with pretreatment compositions, it is also common to subsequently contact the pretreated substrates with an electrodepositable coating composition. Both cationic and anionic electrodepositions are used commercially, with cationic being more prevalent in applications desiring a high level of corrosion protection. Unfortunately, many pretreatment compositions based on Group IV(b) metal compounds, particularly those containing copper ions, when used to treat metal substrates prior to the application of a cationic electrodepositable coating composition, result in relatively poor throwpower of the electrodepositable coating composition.

DE 10 2012 219 296 A1 refers to a method for improving the throwing power of an electrodeposition coating by coating metallic surfaces with aqueous pretreatment compositions.

US 2006/0151070 A1 relates to rinsable, non-chromate, non-metal phosphate coatings for steel, zinc coated steel, and aluminum surfaces to improve the adhesion of siccative coatings to the surface and provide enhanced corrosion protection.

US 2013/0266819 A1 discloses coating compositions that can be applied to metal substrates to enhance paint adhesion even after extended coating times.

### SUMMARY OF THE INVENTION

In certain respects, the present invention is directed to a composition for treating metal substrates comprising (a) a Group IV(b) metal ion and (b) a copper ion, (c) a fluoride ion and (d) an organophosphonic acid, and (e) a carrier, wherein (a) is derived from a zirconium, titanium or hafnium compound or mixtures thereof, wherein (b) is present in the composition in amounts of 5 to 40 ppm based on elemental copper and on total weight of the composition, wherein (d) is a monophosphonic acid, wherein the carrier (e) is an aqueous medium, and wherein the composition has a pH between 3 and 7.

In still other respects, the present invention is directed to methods for pretreating a metal substrate comprising contacting the substrate by first pretreating the metal substrate with a Group IV(b) metal ion followed by treating the pretreated substrate with the above-described composition, followed by electrodepositing a cationic electrodepositable coating on the treated substrate.

The organophosphonic acid has been found to result in an increase in throwpower of the subsequently applied cationic electrodepositable coating composition compared to pretreating the metal substrate with a pretreatment composition without the organophosphonic acid.

### BRIEF DESCRIPTION OF THE DRAWINGS

FIG. 1 is a perspective view showing a box used for determining throwpower; and
FIG. 2 is a view showing schematically the evaluation of throwpower.

### DETAILED DESCRIPTION OF THE INVENTION

The numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

As previously mentioned, certain embodiments of the present invention are directed to compositions for treating metal substrates and to methods for treating metal substrates. Suitable metal substrates for use in the present invention include those that are often used in the assembly of automotive bodies, automotive parts, and other articles, such as small metal parts, including fasteners, i.e., nuts, bolts, screws, pins, nails, clips, buttons, and the like. Specific examples of suitable metal substrates include, but are not limited to, cold rolled steel, hot rolled steel, steel coated with zinc metal, zinc compounds, or zinc alloys, such as electrogalvanized steel, hot-dipped galvanized steel, galvanealed steel, and steel plated with zinc alloy. Also, aluminum alloys, aluminum plated steel and aluminum alloy plated steel substrates may be used. Other suitable non-ferrous metals include copper and magnesium, as well as alloys of these materials. Moreover, the bare metal substrate being coating by the methods of the present invention may be a cut edge of a substrate that is otherwise treated and/or coated over the rest of its surface. The metal substrate coated in accordance with the methods of the present invention may be in the form of, for example, a sheet of metal or a fabricated part.

The substrate to be treated in accordance with the compositions and methods of the present invention may first be cleaned to remove grease, dirt, or other extraneous matter. This is often done by employing mild or strong alkaline cleaners, such as are commercially available and conventionally used in metal pretreatment processes. Examples of alkaline cleaners suitable for use in the present invention include Chemkleen 2010 LP, Chemkleen 163, Chemkleen 177, and Chemkleen 490MX, each of which are commercially available from PPG Industries. Such cleaners are often followed and/or preceded by a water rinse.

As previously indicated, certain embodiments of the present invention are directed to compositions and to methods for treating a metal substrate that comprise contacting the metal substrate with a pretreatment composition comprising a Group IV(b) metal ion according to the present claims. As used herein, the terms "treatment composition" and "pretreatment composition" refer to a composition that is applied to a metal substrate prior to the application of a pigmented coating or paint, particularly an electrodeposited coating. It is believed the treatment composition upon contact with the substrate reacts with and chemically alters the substrate surface and binds to it to form a protective layer enhancing the adhesion and corrosion performance of the subsequently applied pigmented coating.

The treatment composition comprises a carrier, being an aqueous medium, so that the composition is in the form of a solution of a Group IV(b) metal compound in the carrier. In these embodiments, the solution is brought into contact with the substrate by any of a variety of known techniques, such as dipping or immersion, spraying, intermittent spraying, dipping followed by spraying, spraying followed by dipping, brushing, or roll-coating. In certain embodiments, the solution or dispersion when applied to the metal substrate is at a temperature ranging from 15 to 65°C. (60 to 150°F.). The contact time is often from 10 seconds to five minutes, such as 30 seconds to 2 minutes.

The Group IV(b) metal compound is at least partially soluble in the carrier resulting in a Group IV(b) metal ion.

The Group IV(b) metal compound used in the treatment composition is a compound of zirconium, titanium, hafnium, and mixtures thereof. Suitable compounds of zirconium include, but are not limited to, hexafluorozirconic acid, alkali metal and ammonium salts thereof, ammonium zirconium carbonate, zirconyl nitrate, zirconium carboxylates and zirconium hydroxy carboxylates, such as hydrofluorozirconic acid, zirconium acetate, zirconium oxalate, ammonium zirconium glycolate, ammonium zirconium lactate, ammonium zirconium citrate, and mixtures thereof. Suitable compounds of titanium include, but are not limited to, fluorotitanic acid and its salts. A suitable compound of hafnium includes, but is not limited to, hafnium nitrate.

In certain embodiments, the Group IV(b) metal ion is present in the treatment composition in an amount of at least 10 parts per million (ppm) metal, such as at least 100 ppm metal, or, in some cases, at least 150 ppm metal. In certain embodiments, the Group IV(b) metal ion is present in the treatment composition in an amount of no more than 5000 ppm metal, such as no more than 300 ppm metal, or, in some cases, no more than 250 ppm metal. The amount of Group IV(b) metal in the treatment composition can range between any combination of the recited values inclusive of the recited values. The ppm are based on elemental metal and on total weight of the treatment composition and elemental Group IV(b) metal.

The treatment composition also comprises copper ion.

The source of copper ion in the treatment composition is a copper salt at least partially soluble in the carrier. Specific examples of copper compounds, which are suitable for use in the present invention include, but are not limited to, copper cyanide, copper potassium cyanide, copper sulfate, copper nitrate, copper pyrophosphate, copper thiocyanate, disodium copper ethylenediaminetetraacetate tetrahydrate, copper bromide, copper oxide, copper hydroxide, copper chloride, copper fluoride, copper gluconate, copper citrate, copper lauroyl sarcosinate, copper formate, copper acetate, copper propionate, copper butyrate, copper lactate, copper oxalate, copper phytate, copper tartarate, copper malate, copper succinate, copper malonate, copper maleate, copper benzoate, copper salicylate, copper aspartate, copper glutamate, copper fumarate, copper glycerophosphate, sodium copper chlorophyllin, copper fluorosilicate, copper fluoroborate and copper iodate, as well as copper salts of carboxylic acids in the homologous series formic acid to decanoic acid, copper salts of polybasic acids in the series oxalic acid to suberic acid, and copper salts of hydroxycarboxylic acids, including glycolic, lactic, tartaric, malic and citric acids.

When copper ions supplied from a water-soluble copper compound are precipitated as an impurity in the form of copper sulfate, copper oxide, etc., it may be preferable to add a complexing agent that suppresses the precipitation of copper ions, thus stabilizing them as a copper complex in the solution.

In certain embodiments, the copper compound is added as a copper complex salt such as K₃Cu(CN)₄ or Cu-EDTA, which can be present stably in the composition on its own, but it is also possible to form a copper complex that can be present stably in the composition by combining a complexing agent with a compound that is difficultly soluble on its own. Examples thereof include a copper cyanide complex formed by a combination of CuCN and KCN or a combination of CuSCN and KSCN or KCN, and a Cu-EDTA complex formed by a combination of CuSO₄ and EDTA.2Na.

With regard to the complexing agent, a compound that can form a complex with copper ions can be used; examples thereof include inorganic compounds, such as cyanide compounds and thiocyanate compounds, and polycarboxylic acids, and specific examples thereof include ethylenediaminetetraacetic acid, salts of ethylenediaminetetraacetic acid, such as dihydrogen disodium ethylenediaminetetraacetate dihydrate, aminocarboxylic acids, such as nitrilotriacetic acid and iminodiacetic acid, oxycarboxylic acids, such as citric acid and tartaric acid, succinic acid, oxalic acid, ethylenediaminetetramethylenephosphonic acid, and glycine.

The copper ion is present in the treatment compositions in an amount of at least 5 ppm, or in some cases, at least 10 ppm. The copper ion is included in such treatment compositions in an amount of no more than 40 ppm of total metal (measured as elemental metal). The amount of copper ion in the treatment composition can range between any combination of the recited values inclusive of the recited values. The amount of copper is based on total weight of the treatment composition and elemental copper.

The treatment compositions further contain a fluorine ion or free fluorine. The supply source of the fluorine ion is not particularly limited; examples thereof include fluorides such as hydrofluoric acid (HF), ammonium fluoride (NH₄F), fluoroboric acid, ammonium hydrogen fluoride (NH₄HF₂), sodium fluoride (NaF), and sodium hydrogen fluoride (NaHF). Typically, the fluorine ion is present in the treatment composition in amounts of 20 to 300, usually 50 to 200 ppm. The amount is based on elemental fluorine and total weight of the treatment composition.

The organophosphonic acid compound means an organic compound containing a phosphonic group (-PO₃H₂), and this compound is preferably a compound in which the phosphonic group (-PO₃H₂) combines with an organo group containing 6 or less carbon atoms, usually 2 to 4 carbon atoms. The organophosphonic acid is a monophosphonic acid. Examples of suitable phosphonic acids are butyl phosphonic acid, pentyl phosphonic acid and hexyl phosphonic acid.

The organophosphonic acid compounds may be used alone or in combination of two or more.

The amount of the organophosphonic acid typically has a lower limit of 15 ppm and an upper limit of 500 ppm. When the amount is less than 15 ppm, there is negligible increase in throwpower of the subsequently applied electrodeposition coating. Amounts greater than 500 ppm do not have a beneficial effect of increasing throwpower. Usually, the lower limit is 15 ppm and the upper limit is 50 ppm. The amount is based on elemental phosphorus and total weight of the treatment composition.

The treatment composition may include additives such as surfactants that function as defoamers or substrate wetting agents. Anionic, cationic, amphoteric, or nonionic surfactants may be used. Compatible mixtures of such materials are also suitable. Defoaming surfactants are often present at levels up to 1 percent, such as up to 0.1 percent by volume, and wetting agents are often present at levels up to 2 percent, such as up to 0.5 percent by volume, based on the total volume of the solution.

The treatment composition has a pH between 3 and 7. The solids content of the treatment composition typically is from about 0.1 to 10% resin solids.

In certain embodiments, the film coverage of the residue of the treatment composition generally ranges from 1 to 1000 milligrams per square meter (mg/m²), such as 10 to 400 mg/m². The thickness of the treatment coating can vary, but it is generally very thin, often having a thickness of less than 1 micrometer, in some cases it is from 1 to 500 nanometers, and, in yet other cases, it is 10 to 300 nanometers.

Following contact with the treatment composition, the substrate may be rinsed with water and dried.

The corrosion resistance of the treated metal substrates can be enhanced by pretreating, usually by prerinsing the substrate with a Group IV(b) metal ion prior to the application of the treatment composition. Typically, the prerinse is applied after the metal has been cleaned with an alkaline cleaner and rinsed with deionized water.

Typically, a solution of the Group IV(b) metal ion is contacted with the substrate by any of a variety of techniques, including dipping or immersion, spraying, intermittent spraying, dipping followed by spraying, spraying followed by dipping, brushing, or roll-coating. In certain embodiments, a dipping or immersion technique is used and the solution, when applied to the metal substrate, is at a temperature ranging from about room temperature to a slightly elevated temperature of up to about 140°F. (about 15 to 60°C.). The contact time is often from 10 seconds to five minutes, such as 30 seconds to 2 minutes. After removal of the bare substrate from the solution, the substrate is usually rinsed with water and dried.

The pretreatment solution referenced above is often an aqueous solution of a water soluble Group IV(b) metal such as the zirconium and titanium compounds mentioned above.

Typically, the Group IV(b) metal ion is included in the pretreatment solution in an amount of at least 1 ppm, such as at least 50 ppm, or, in some cases, at least 100 ppm. In certain embodiments, the Group IV(b) metal ion is included in the solution in an amount of no more than 5,000 ppm, such as no more than 1,000 ppm, or, in some cases, no more than 300 ppm. The amount of Group IV(b) metal ion in the solution can range between any combination of the recited values inclusive of the recited values. In certain embodiments, the Group IV(b) metal ion included in the solution is between about 5 and 100 ppm. The amount of the Group IV(b) metal is based on elemental Group IV(b) metal and total weight of the pretreatment solution.

After the metal substrate has been contacted with the treatment composition, the metal substrate is then contacted with a cationic electrodepositable coating composition comprising a film-forming resin.

As used herein, the term "film-forming resin" refers to resins that can form a self-supporting continuous film on at least a horizontal surface of a substrate upon removal of any diluents or carriers present in the composition or upon curing at ambient or elevated temperature. Conventional film-forming resins that may be used include, without limitation, those typically used in automotive OEM coating compositions.

In certain embodiments, the coating composition comprises a thermosetting film-forming resin. As used herein, the term "thermosetting" refers to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. Curing or crosslinking reactions also may be carried out under ambient conditions. Once cured or crosslinked, a thermosetting resin will not melt upon the application of heat and is insoluble in solvents. In other embodiments, the coating composition comprises a thermoplastic film-forming resin. As used herein, the term "thermoplastic" refers to resins that comprise polymeric components that are not joined by covalent bonds and thereby can undergo liquid flow upon heating and are soluble in solvents.

As previously indicated, in certain embodiments, the substrate is contacted with a coating composition comprising a film-forming resin by an electrocoating step wherein an electrodepositable composition is deposited onto the metal substrate by electrodeposition. In the process of electrodeposition, the metal substrate being treated, serving as an electrode, and an electrically conductive counter electrode are placed in contact with an ionic, electrodepositable composition. Upon passage of an electric current between the electrode and counter electrode while they are in contact with the electrodepositable composition, an adherent film of the electrodepositable composition will deposit in a substantially continuous manner on the metal substrate.

Electrodeposition is usually carried out at a constant voltage in the range of from 1 volt to several thousand volts, typically between 50 and 500 volts. Current density is usually between 1.0 ampere and 15 amperes per square foot (10.8 to 161.5 amperes per square meter) and tends to decrease quickly during the electrodeposition process, indicating formation of a continuous self-insulating film.

The electrodepositable composition utilized in certain embodiments of the present invention often comprises a resinous phase dispersed in an aqueous medium wherein the resinous phase comprises: (a) an active hydrogen group-containing cationic electrodepositable resin, and (b) a curing agent having functional groups reactive with the active hydrogen groups of (a).

A wide variety of electrodepositable film-forming resins are known and can be used in the present invention so long as the polymers are "water dispersible", i.e., adapted to be solubilized, dispersed or emulsified in water. The water dispersible polymer is cationic in nature, that is, the polymer will contain cationic functional groups to impart a positive charge.

Examples of such cationic film-forming resins include amine salt group-containing resins, such as the acid-solubilized reaction products of polyepoxides and primary or secondary amines, such as those described in U.S. Pat. Nos. 3,663,389; 3,984,299; 3,947,338; and 3,947,339. Often, these amine salt group-containing resins are used in combination with a blocked isocyanate curing agent. The isocyanate can be fully blocked, as described in U.S. Pat. No. 3,984,299, or the isocyanate can be partially blocked and reacted with the resin backbone, such as is described in U.S. Pat. No. 3,947,338. Also, one-component compositions as described in U.S. Pat. No. 4,134,866 and DE-OS No. 2,707,405 can be used as the film-forming resin. Besides the epoxy-amine reaction products, film-forming resins can also be selected from cationic acrylic resins, such as those described in U.S. Pat. Nos. 3,455,806 and 3,928,157.

Besides amine salt group-containing resins, quaternary ammonium salt group-containing resins can also be employed, such as those formed from reacting an organic polyepoxide with a tertiary amine salt as described in U.S. Pat. Nos. 3,962,165; 3,975,346; and 4,001,101. Examples of other cationic resins are ternary sulfonium salt group-containing resins and quaternary phosphonium salt-group containing resins, such as those described in U.S. Pat. Nos. 3,793,278 and 3,984,922, respectively. Also, film-forming resins which cure via transesterification, such as described in European Application No. 12463 can be used. Further, cationic compositions prepared from Mannich bases, such as described in U.S. Pat. No. 4,134,932, can be used.

In certain embodiments, the active hydrogen-containing cationic electrodepositable resin is present in the electrodepositable composition in an amount of 1 to 60 percent by weight, such as 5 to 25 percent by weight, based on total weight of the electrodeposition bath.

The polyisocyanate curing agents are typically utilized in conjunction with the active hydrogen containing cationic electrodepositable resin in amounts ranging from 5 percent to 60 percent by weight, such as from 20 percent to 50 percent by weight, the percentages based on the total weight of the resin solids of the electrodepositable composition.

The electrodepositable compositions described herein are in the form of an aqueous dispersion. The term "dispersion" is believed to be a two-phase transparent, translucent or opaque resinous system in which the resin is in the dispersed phase and the water is in the continuous phase. The average particle size of the resinous phase is generally less than 1.0 and usually less than 0.5 micrometer, often less than 0.15 micrometer.

The concentration of the resinous phase in the aqueous medium is often at least 1 percent by weight, such as from 2 to 60 percent by weight, based on total weight of the aqueous dispersion. When such compositions are in the form of resin concentrates, they generally have a resin solids content of 20 to 60 percent by weight based on weight of the aqueous dispersion.

After deposition, the coating is often heated to cure the deposited composition. The heating or curing operation is often carried out at a temperature in the range of from 120 to 250°C., such as from 120 to 190°C. for a period of time ranging from 10 to 60 minutes. In certain embodiments, the thickness of the resultant film is from 10 to 50 micrometer.

Illustrating the invention are the following examples that are not to be considered as limiting the invention to their details. All parts and percentages in the examples, as well as throughout the specification, are by weight unless otherwise indicated.

Only the following examples, in which the composition for treating a metal substrate comprising (a) a Group IV(b) metal ion, (b) a copper ion, (c) a fluoride ion, (d) an organophosphonic acid, and (e) a carrier, wherein (a) is derived from a zirconium, titanium or hafnium compound or mixtures thereof, wherein (b) is present in the composition in amounts of 5 to 40 ppm based on elemental copper and on total weight of the composition, wherein (d) is a monophosphonic acid, wherein the carrier (e) is an aqueous medium, and wherein the composition has a pH between 3 and 7 has been used, have to be regarded as "according to the invention". The other compositions show alternatives not falling under the claimed invention.

### EXAMPLES

As defined herein, the ability for an electrodepositable coating composition to coat interior recesses of a substrate, at a given temperature and voltage, is called "throwpower". A higher "throwpower" means that the electrodepositable coating composition is further "thrown" into the recesses of a recessed substrate. Higher throwpower therefore is synonymous with greater surface coverage on hard to reach recessed areas of a substrate.

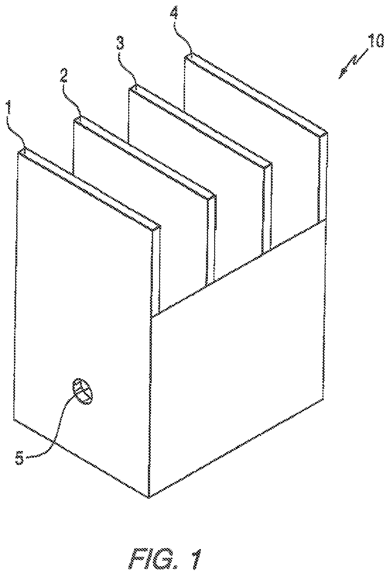

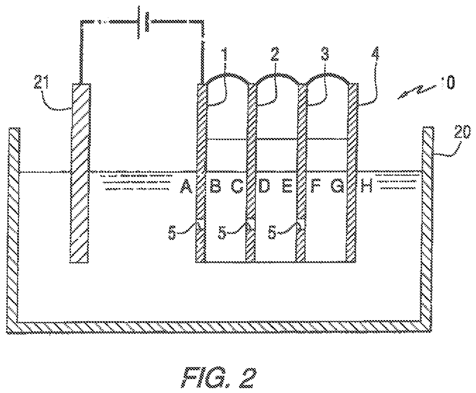

The throwpower was evaluated in accordance with the "Nagoya Box Method" as shown in FIGS. 1 and 2. The Nagoya Box 10 has 4 parallel metal plates 1, 2, 3 and 4 having dimensions of 6.9 cm (w) x 15.2 cm (I) with a distance of 20 mm between them with the bottom and sides sealed. Through holes 5 of diameter 1.6 cm are centered 5 cm from the bottom edge of the metal plates 1, 2 and 3 but not 4.

The box 10 was immersed into an electrodeposition coating container 20 filled with a cathodic electrodeposition coating material. In this case, the cathodic electrodeposition coating material flows into the box 10 only from each through hole 5.

While stirring the cathodic electrodeposition coating material, the metal plates 1 to 4 are electrically connected and a counter electrode 21 was disposed at a distance of 150 mm from the metal plate 1. A voltage is applied to the metal plates 1-4 as a negative electrode and the counter electrode 21 as a positive electrode to conduct a cathodic electrodeposition coating.

The box 10 was immersed in an electrodepositable composition (ED 7000Z from PPG Industries) heated to 32°C. that was magnetically stirred. Each panel served as a cathode that was electrically connected to a counter electrode spaced 150 mm from the first panel. Voltage was applied to the panels for a duration in which there was an initial 30 s ramp imposed to rise to maximum voltage. The maximum voltage applied was determined as the value that would result in the formation of an electrodeposited coating on A face that was 20 micrometer thick after 180 seconds. In subsequent experiments, the duration of time that maximum voltage was applied was determined by monitoring the coating that developed on G face. In these experiments, voltage was applied on a timescale that would result in the formation of an electrodeposited coating on G face that was 20 micrometer thick with complete coverage of the panel face and uniform thickness.

The coated panels were rinsed thoroughly in deionized water and placed in an electric oven heated to 175°C. for 25 minutes. The thickness and uniformity of the coating on each panel face was evaluated in 4 regions positioned at right angles spaced 1 mm away from the center hole on 1, 2 and 3 panels. These locations were also examined on the face of 4 panel which did not contain a hole. In order to assess the throwpower of the electrodepositable composition over different pretreated surfaces, the film thickness on G face was divided by the film thickness on A face. The change in throwpower imparted by adding organophosphonic acid to the pretreatment was observed by normalizing the throwpower of the control pretreated surface which contained no organophosphonic acid to "0".

For testing, a number of treatment compositions were prepared with various organophosphonic acids and a control with no organophosphonic acids. Compositions comprising Butyl Phosphonic Acid, Ethyl Phosphonic Acid, Vinyl Phosphonic Acid or Hexyl Phosphonic Acid are according to the invention, the remaining compositions represent reference examples.

The treatment composition had the following basic formulation: 175 ppm Zr, 20 ppm Cu, pH 4.6-4.7, and 70-75 ppm free fluoride. Each pretreatment bath was prepared in the following manner. To a clean 5-gallon bucket was added 16.9 g fluorozirconic acid (45 wt.% in water, PPG Industries), 20.0 g copper nitrate solution (2 wt.% Cu in deionized (DI) water), and 10.0 g Chemfos AFL (PPG Industries). If applicable, the phosphonic acid was then added to the pretreatment bath to give the appropriate level of elemental phosphorus. The bath was brought to a pH of 4.6-4.7 with Chemfil buffer, which is an alkaline material available from PPG Industries. For DEQUEST 2010, only 1.1 g of Chemfos AFL was added instead of 10.0 g. For hexylphosphonic acid, the free fluoride was measured to be 95-100 ppm instead of the expected 70-75 ppm.

To the basic formulation was added the following organophosphonic acids in the following amounts expressed as parts per million (ppm) based on elemental phosphorus.

| **Control** | **No added Organophosphonic Acid** |
|---|---|
| Butyl Phosphonic Acid | 7.5 ppm |
| Butyl Phosphonic Acid | 15.0 ppm |
| Butyl Phosphonic Acid | 30.0 ppm |
| Butyl Phosphonic Acid | 45.0 ppm |
| Phosphoric Acid | 30 ppm |
| Ethyl Phosphonic Acid | 30 ppm |
| Vinyl Phosphonic Acid | 30 ppm |
| Hexyl Phosphonic Acid | 30 ppm |
| Dibutyl Phosphate | 30 ppm |
| DEQUEST 2010¹ | 30 ppm |

| | |
|---|---|
| ¹ Hydroxyethylidine-1,1-diphosphonic acid. | |

Cold rolled steel panels 1, 2, 3 and 4 as shown in FIG. 2 were treated with the above compositions as follows. Cold rolled steel panels were obtained from ACT (Item #26920, unpolish, cut only, 150x70 mm). Panels 1, 2, 3 and 4 were degreased for two minutes at 49°C. (120°F.) in a spray tank. The alkaline cleaner was comprised of 1.25 wt% Chemkleen 2010LP (PPG Industries) and 0.13 wt% Chemkleen 181ALP (PPG Industries) in DI water. After degreasing, the panels were immersed in DI water for 30 seconds followed by a 30 second DI spray rinse. After rinsing, the panels were immersed in the Zr-pretreatment bath for two minutes at 27°C. (80°F.). The panels were then spray rinsed with DI water for 30 seconds and were dried with hot air for five minutes at 54°C. (130°F.).

The treated panels were then tested for throwpower as described above. The results are reported in Table I below.

Also evaluated were treated panels prepared as described above but in which the panels were pretreated with a zirconium rinse. The zirconium rinse pretreatment composition was prepared as follows: 200 ppm Zr, 155 ppm free fluoride, pH 3.48. To a spray tank was added 19.96 g fluorozirconic acid followed by 30.0 g Chemfos AFL. The solution was neutralized with Chemfil buffer to a pH of 3.48.

The cold rolled steel panels 1, 2, 3 and 4 were pretreated in the same manner as when no Zr rinse was applied. However, the zirconium rinse step was applied for one minute at 24°C. (75°F.) between the DI spray rinse stage and the immersion Zr-pretreatment stage.

All panels that were pretreated were analyzed by XRF to understand the coating composition. Using an Axios Max-Advance X-Ray Fluorescence (XRF) spectrophotometer (PANanytical, Almelo, the Netherlands), the weight percentage of zirconium, copper, and phosphorus could be determined for each pretreatment combination. The results are reported in the table below.

| **Zr Rinse** | **Additive, ppm Elemental Phosphorus** | **Weight % Zirconium** | **Weight % Copper** | **Weight % Phosphorus** |
|---|---|---|---|---|
| No | Control | 1.3 | 3.9 | 0.007 |
| No | Butyl Phosphonic Acid, 7.5 | 0.90 | 4.1 | 0.067 |
| No | Butyl Phosphonic Acid, 15 | 0.63 | 4.3 | 0.090 |
| No | Butyl Phosphonic Acid, 30 | 0.37 | 4.8 | 0.097 |
| No | Butyl Phosphonic Acid, 45 | 0.3 | 4.8 | 0.11 |
| No | Phosphoric Acid, 30 | 0.58 | 3.5 | 0.34 |
| No | Ethyl Phosphonic Acid, 30 | 0.35 | 4.1 | 0.064 |
| No | Vinyl Phosphonic Acid, 30 | 0.35 | 3.5 | 0.067 |
| No | Hexyl Phosphonic Acid, 30 | 0.56 | 4.7 | 0.063 |
| No | Dibutyl Phosphate, 30 | 1.4 | 4.8 | 0.009 |
| No | DEQUEST 2010, 30 | 1.2 | 3.3 | 0.16 |
| Yes | Control | 1.8 | 6.2 | 0.010 |
| Yes | Butyl Phosphonic Acid, 7.5 | 1.3 | 4.7 | 0.085 |
| Yes | Butyl Phosphonic Acid, 15 | 0.92 | 5.1 | 0.11 |
| Yes | Butyl Phosphonic Acid, 30 | 0.63 | 5.2 | 0.12 |
| Yes | Butyl Phosphonic Acid, 45 | 0.60 | 5.7 | 0.15 |
| Yes | Phosphoric Acid, 30 | 0.74 | 5.1 | 0.42 |
| Yes | Ethyl Phosphonic Acid, 30 | 0.75 | 6.1 | 0.12 |
| Yes | Vinyl Phosphonic Acid, 30 | 0.66 | 5.6 | 0.11 |
| Yes | Hexyl Phosphonic Acid, 30 | 1.2 | 5.9 | 0.047 |
| Yes | Dibutyl Phosphate, 30 | 1.7 | 5.2 | 0.019 |
| Yes | DEQUEST 2010, 30 | 1.4 | 5.0 | 0.22 |

The throwpower results for these metal panels are also reported in Table I below. For comparison purposes, the control treated panel containing no additive without or with a Zr pre-rinse was used to normalize to "0" for each set of data in which additives were incorporated in the control pretreatment that was applied without or with a Zr pre-rinse. This determined if incorporating the additive resulted in a significant improvement over the control panel. Positive values indicate increased throwpower and improvement over the control.

**Table I**

| **Throwpower Evaluation** | | | |
|---|---|---|---|
| Compositions comprising Butyl Phosphonic Acid, Ethyl Phosphonic Acid, Vinyl Phosphonic Acid or Hexyl Phosphonic Acid are according to the invention, the remaining compositions represent reference examples. | | | |
| **Zr Rinse** | **Additive, ppm Elemental Phosphorus** | **Throwpower (%)** | **Normalized throwpower (%)** |
| No | Control | 52 | 0 |
| No | Butyl Phosphonic Acid, 7.5 | 80 | 54 |
| No | Butyl Phosphonic Acid, 15 | 72 | 37 |
| No | Butyl Phosphonic Acid, 30 | 80 | 53 |
| No | Butyl Phosphonic Acid, 45 | 83 | 59 |
| No | Phosphoric Acid, 30 | 73 | 41 |
| No | Ethyl Phosphonic Acid, 30 | 73 | 39 |
| No | Vinyl Phosphonic Acid, 30 | 74 | 41 |
| No | Hexyl Phosphonic Acid, 30 | 60 | 16 |
| No | Dibutyl Phosphate, 30 | 52 | -1 |
| No | DEQUEST 2010, 30 | 65 | 24 |
| Yes | Control | 64 | 0 |
| Yes | Butyl Phosphonic Acid, 7.5 | 68 | 7 |
| Yes | Butyl Phosphonic Acid, 15 | 68 | 6 |
| Yes | Butyl Phosphonic Acid, 30 | 74 | 17 |
| Yes | Butyl Phosphonic Acid, 45 | 81 | 28 |
| Yes | Phosphoric Acid, 30 | 66 | 4 |
| Yes | Ethyl Phosphonic Acid, 30 | 74 | 16 |
| Yes | Vinyl Phosphonic Acid, 30 | 69 | 8 |
| Yes | Hexyl Phosphonic Acid, 30 | 77 | 22 |
| Yes | Dibutyl Phosphate, 30 | 59 | -8 |
| Yes | DEQUEST 2010, 30 | 73 | 14 |

As will be appreciated by the foregoing description, the present invention is directed to a composition for treating a metal substrate comprising (a) a Group IV(b) metal ion, (b) a copper ion, (c) a fluoride ion, (d) an organophosphonic acid, and (e) a carrier, wherein (a) is derived from a zirconium, titanium or hafnium compound or mixtures thereof, wherein (b) is present in the composition in amounts of 5 to 40 ppm based on elemental copper and on total weight of the composition, wherein (d) is a monophosphonic acid, wherein the carrier (e) is an aqueous medium, and wherein the composition has a pH between 3 and 7, and to methods for coating a metal substrate comprising: (a) contacting the metal substrate with a Group IV(b) metal ion, (b) contacting the substrate with the above treatment composition, and (c) electrophoretically depositing a cationic electrodepositable coating composition onto the substrate.

The three steps (a), (b) and (c) are typically done sequentially without any intervening steps or processes. In certain other embodiments, one or more intervening steps or processes may occur between any of steps (a), (b) and/or (c).

## Claims

1. A composition for treating a metal substrate comprising:
(a) a Group IV(b) metal ion,
(b) a copper ion,
(c) a fluoride ion, and
(d) an organophosphonic acid, and
(e) a carrier,
wherein (a) is derived from zirconium, titanium or hafnium compound or mixtures thereof,
wherein (b) is present in the composition in amounts of 5 to 40 ppm based on elemental copper and on total weight of the composition,
wherein (d) is a monophosphonic acid,
wherein (e) is an aqueous medium, and
wherein the composition has a pH between 3 and 7.

2. The composition of claim 1 wherein (a) is derived from a zirconium compound or mixtures of zirconium compounds.

3. The composition of claim 1 in which (c) is derived from the group comprising HF, NH₄F, NH₄HF₂, NaF and NaHF₂.

4. The composition of claim 1 in which the organo group of the organophosphonic acid has 6 or less carbon atoms.

5. The composition of claim 1 in which the organo group of the organophosphonic acid has from 2 to 4 carbon atoms.

6. The composition of claim 1 in which (a) is present in the composition in amounts of 50 to 300 parts per million (ppm) based on elemental metal and on total weight of the composition.

7. The composition of claim 1 in which (c) is present in the composition in amounts of 50 to 200 ppm based on elemental fluorine and on total weight of the composition.

8. The composition of claim 1 in which (d) is present in the composition in amounts of 15 to 50 ppm based on elemental phosphorus and on total weight of the composition.

9. A method for coating a metal substrate comprising:
(a) pretreating the metal substrate with a Group IV(b) metal ion, followed by
(b) treating the substrate of (a) with a composition according to claim 1:
(c) electrodepositing a cationic electrodepositable composition on the substrate of (b).

10. The method of claim 9 in which the Group IV(b) metal ion of (a) is derived from a zirconium compound or mixture of zirconium compounds.

11. The method of claim 10 in which the Group IV(b) metal ion of (a) is present in an aqueous composition in amounts of 50 to 300 ppm based on elemental Group IV(b) metal and on the total weight of the composition.

12. The method of claim 9, wherein the composition in step (b) is defined as in any of claims 2, and 4 - 8.

## Patentansprüche

1. Eine Zusammensetzung zur Behandlung eines Metallsubstrats, enthaltend:
(a) ein Gruppe IV(b) Metallion,
(b) ein Kupferion,
(c) ein Fluoridion, und
(d) eine Organophosphonsäure, und
(e) ein Träger,
wobei (a) von einer Zirkonium-, Titan oder Hafniumverbindung oder Mischungen davon abgeleitet ist,
wobei (b) in der Zusammensetzung in Mengen von 5 bis 40 ppm, bezogen auf elementares Kupfer und auf das Gesamtgewicht der Zusammensetzung vorhanden ist,
wobei (d) eine Monophosphonsäure ist,
wobei (e) ein wässriges Medium ist, und
wobei die Zusammensetzung einen pH zwischen 3 und 7 hat.

2. Die Zusammensetzung nach Anspruch 1, wobei (a) von einer Zirkoniumverbindung oder Mischungen von Zirkoniumverbindung abgeleitet ist.

3. Die Zusammensetzung nach Anspruch 1, in der (c) von einer Gruppe enthaltend HF, NH₄F, NH₄HF₂, NaF and NaHF₂ abgeleitet ist.

4. Die Zusammensetzung nach Anspruch 1, in der die Organogruppe der Organophosphonsäure 6 oder weniger Kohlenstoffatome aufweist.

5. Die Zusammensetzung nach Anspruch 1, in der die Organogruppe der Organophosphonsäure von 2 bis 4 Kohlenstoffatome aufweist.

6. Die Zusammensetzung nach Anspruch 1, in der (a) in der Zusammensetzung in Mengen von 50 bis 300 Anteile pro Million (ppm), bezogen auf elementares Metall und auf das Gesamtgewicht der Zusammensetzung, vorhanden ist.

7. Die Zusammensetzung nach Anspruch 1, in der (c) in der Zusammensetzung in Mengen von 50 bis 200 ppm, bezogen auf elementares Fluor und auf das Gesamtgewicht der Zusammensetzung, vorhanden ist.

8. Die Zusammensetzung nach Anspruch 1, in der (d) in der Zusammensetzung in Mengen von 15 bis 50 ppm, bezogen auf elementares Phosphor und auf das Gesamtgewicht der Zusammensetzung, vorhanden ist.

9. Ein Verfahren zum Beschichten eines Metallsubstrats, umfassend:
(a) Vorbehandeln des Metallsubstrats mit einem Metallion der Gruppe IV(b), gefolgt von einem
(b) Behandeln des Substrats von (a) mit einer Zusammensetzung nach Anspruch 1,
(c) Elektroabscheiden einer kationischen elektroabscheidbaren Zusammensetzung auf dem Substrat von (b).

10. Das Verfahren nach Anspruch 9, in der das Gruppe IV(b) Metallion von (a) von einer Zirkoniumverbindung oder Mischung von Zirkoniumverbindungen abgeleitet ist.

11. Das Verfahren nach Anspruch 10, in der das Gruppe IV(b) Metallion von (a) in einer wässrigen Zusammensetzung in Mengen von 50 bis 300 ppm, bezogen auf elementrares Gruppe IV(b) Metall und auf das Gesamtgewicht der Zusammensetzung, vorhanden ist.

12. Das Verfahren nach Anspruch 9, wobei die Zusammensetzung in Schritt (b) wie in einem der Ansprüche 2 und 4-8 definiert ist.

## Revendications

1. Composition de traitement d'un support en métal, qui comprend :
(a) un ion de métal du groupe IV(b),
(b) un ion de cuivre,
(c) un ion fluorure,
(d) un acide organophosphonique,
(e) et un véhicule,
étant entendu que
le composant (a) provient d'un composé de zirconium, de titane ou de hafnium, ou de mélanges de tels composés,
le composant (b) se trouve dans la composition en des proportions, exprimées en cuivre élémentaire et rapportées au poids total de la composition, de 5 à 40 parties par million (ppm),
le composant (d) est un acide monophosphonique,
le composant (e) est un milieu aqueux,
et la composition présente un pH de valeur comprise entre 3 et 7.

2. Composition selon la revendication 1, dans laquelle le composant (a) provient d'un composé de zirconium, ou de mélanges de composés de zirconium.

3. Composition selon la revendication 1, dans laquelle le composant (c) provient de l'ensemble constitué par les composés de formules HF, NH₄F, NH₄HF₂, NaF et NaHF₂.

4. Composition selon la revendication 1, dans laquelle le groupe organique de l'acide organophosphonique comporte 6 atomes de carbone ou moins.

5. Composition selon la revendication 1, dans laquelle le groupe organique de l'acide organophosphonique comporte de 2 à 4 atomes de carbone.

6. Composition selon la revendication 1, dans laquelle le composant (a) se trouve dans la composition en des proportions, exprimées en métal élémentaire et rapportées au poids total de la composition, de 50 à 300 ppm.

7. Composition selon la revendication 1, dans laquelle le composant (c) se trouve dans la composition en des proportions, exprimées en fluor élémentaire et rapportées au poids total de la composition, de 50 à 200 ppm.

8. Composition selon la revendication 1, dans laquelle le composant (d) se trouve dans la composition en des proportions, exprimées en phosphore élémentaire et rapportées au poids total de la composition, de 15 à 50 ppm.

9. Procédé de revêtement d'un support en métal, qui comporte les étapes suivantes :
(a) prétraitement du support en métal par un ion de métal du groupe IV(b),
(b) puis traitement du support obtenu à l'issue de l'étape (a) avec une composition conforme à la revendication 1,
(c) électrodéposition d'une composition apte au dépôt électrolytique cationique sur le support obtenu à l'issue de l'étape (b).

10. Procédé selon la revendication 9, dans lequel l'ion de métal du groupe IV(b) cité à l'étape (a) provient d'un composé de zirconium, ou de mélanges de composés de zirconium.

11. Procédé selon la revendication 10, dans lequel l'ion de métal du groupe IV(b) cité à l'étape (a) se trouve dans une composition aqueuse en des proportions, exprimées en métal élémentaire du groupe IV(b) et rapportées au poids total de la composition, de 50 à 300 ppm.

12. Procédé selon la revendication 9, dans lequel la composition citée à l'étape (b) répond aux définitions figurant dans n'importe lesquelles des revendications 2 et 4 à 8.
